# FASCICULE DE BREVET EUROPEEN

(11) **EP 0 654 205 B1**
(45) Date de publication et mention de la délivrance du brevet: **04.02.1998**
(21) Numéro de dépôt: 94440076.1
(22) Date de dépôt: 23.11.1994
(51) Int. Cl.: A01B 71/06

(54) **Machine agricole à timon perfectionné**
Landwirtschaftliche Maschine mit einer verbesserten Deichsel
Agricultural machine with an improved drawbar

(30) Priorité: 23.11.1993 FR 9314216
(43) Date de publication de la demande: 24.05.1995
(73) Titulaire: KUHN S.A., F-67700 Saverne (FR)
(72) Inventeur: Wattron, Bernard, F-67700 Haegen/France (FR)

(56) Documents cités:
- EP-A- 0 027 295
- EP-A- 0 124 462
- EP-A- 0 269 901
- EP-A- 0 316 899
- EP-A- 0 434 915
- EP-A- 0 512 326
- GB-A- 2 171 884
- US-A- 2 421 044
- US-A- 5 186 271

## Description

La présente invention concerne une machine agricole comportant un corps muni d'organes de travail et un timon comprenant un timon primaire destiné à être lié à un véhicule tracteur, un timon secondaire lié au corps de la machine et un dispositif de liaison et de transmission liant le timon primaire au timon secondaire et par l'intermédiaire duquel sont animés les organes de travail à partir de la prise de force dudit véhicule tracteur.

Une telle machine agricole, réalisée sous forme de faucheuseconditionneuse, est connue par le document **EP 0 027 295 A1.** Le timon primaire de cette machine agricole connue est formé d'un cintre et est destiné à être lié aux deux barres inférieures du dispositif d'attelage d'un véhicule tracteur auquel doit être attelée la machine agricole. Le timon primaire peut ainsi pivoter autour d'un premier axe matérialisé par les deux points de liaison auxdites barres inférieures. Ce premier axe s'étend, en position normale de déplacement, au moins sensiblement horizontalement et au moins sensiblement orthogonalement à la direction d'avance.

Le dispositif de liaison et de transmission comporte deux parties pouvant pivoter l'une par rapport à l'autre autour d'un deuxième axe dirigé vers le haut (en position normale de déplacement, ce deuxième axe s'étend au moins sensiblement verticalement.)

Dans une réalisation, la partie primaire du dispositif de liaison et de transmission est constituée d'un carter renvoi d'angle primaire présentant un fût dirigé vers le haut et guidé en rotation dans un moyeu soudé à l'extrémité frontale du timon secondaire et constituant la partie secondaire du dispositif de liaison et de transmission. Les axes longitudinaux confondus du fût et du moyeu définissent le deuxième axe. Le carter renvoi d'angle primaire supporte un arbre d'entrée dont l'axe de rotation s'étend suivant la direction d'avance, ainsi qu'un arbre de sortie guidé en rotation dans le fût et dont l'axe de rotation est confondu avec le deuxième axe. A l'intérieur du carter renvoi d'angle primaire, ces deux arbres sont accouplés au moyen d'un couple de roues dentées coniques. A l'extérieur du carter renvoi d'angle primaire, l'arbre d'entrée est accouplé à un arbre télescopique à joints universels par l'intermédiaire duquel il est en liaison d'entraînement avec la prise de force du véhicule tracteur. L'arbre de sortie, quant à lui, est muni à son extrémité supérieure d'une poulie transmettant le mouvement aux organes de travail au moyen de courroies.

Dans une autre réalisation décrite dans le document EP 0 027 295 A1, la partie secondaire du dispositif de liaison et de transmission est également constituée d'un carter renvoi d'angle. Ce carter renvoi d'angle secondaire présente un moyeu dirigé vers la bas dans lequel est guidé en rotation le fût du carter renvoi d'angle primaire. L'arbre de sortie du carter renvoi d'angle primaire pénètre à l'intérieur du carter renvoi d'angle secondaire et y est accouplé au moyen d'un couple de roues dentées coniques à l'arbre de sortie dudit carter renvoi d'angle secondaire. Ce dernier arbre de sortie transmet le mouvement aux organes de travail.

Le timon primaire est lié à la partie primaire du dispositif de liaison et de transmission au moyen d'une liaison pivot prévue au niveau de la partie médiane du cintre et d'axe dirigé au moins sensiblement suivant la direction d'avance. En fait, le cintre est monté sur l'arbre d'entrée du carter renvoi d'angle primaire de sorte à pouvoir pivoter autour de l'axe de rotation dudit arbre d'entrée.

Alors que dans la réalisation décrite dans le document EP 0 027 295 A1, le cintre formant le timon primaire est monté directement sur l'arbre d'entrée du carter renvoi d'angle primaire, on connaît une réalisation qui a été commercialisée, dans laquelle le cintre est monté sur un tourillon fixé sur le carter renvoi d'angle primaire et s'étendant parallèlement à l'arbre d'entrée et en-dessous de ce dernier. Le cintre est ainsi également susceptible de pivoter autour d'un axe dirigé au moins sensiblement suivant la direction d'avance.

Grâce à ces trois axes, la machine agricole pourra parfaitement s'adapter au relief du sol indépendamment de la position du véhicule tracteur auquel elle est attelée et jouira d'une très grande maniabilité aussi bien au travail qu'au transport. Du reste, au travail, cette grande indépendance de la machine agricole par rapport au véhicule tracteur est sans influence sur les divers organes destinés à transmettre le mouvement aux organes de travail.

Dans ces différentes réalisations connues, le cintre formant le timon primaire est monté en porte-à-faux sur le carter renvoi d'angle primaire et plus généralement sur le dispositif de liaison et de transmission. Ceci peut être préjudiciable pour la durée de vie du dispositif de liaison et de transmission, le risque augmentant d'ailleurs avec l'augmentation des largeurs de travail et corrélativement du poids des machines agricoles.

Le document **EP 0 269 901 A1** décrit aussi une machine agricole comportant un corps muni d'organes de travail et un timon. Ce timon comprend tout d'abord un timon primaire destiné à être lié, via un attelage rapide, aux deux barres inférieures et à la barre supérieure du dispositif d'attelage à trois points d'un véhicule tracteur. Le timon primaire est ainsi lié au véhicule tracteur sans possibilité de pivotement autour d'un axe horizontal dirigé orthogonalement à la direction d'avance. Le timon comprend ensuite un timon secondaire lié directement au timon primaire au moyen d'une rotule. Ce timon secondaire peut ainsi pivoter par rapport au timon primaire autour de trois axes orthogonaux passant par le centre de la rotule. Cette machine agricole connue comporte ensuite un dispositif de transmission qui est exclusivement supporté par le timon secondaire.

Le document **EP 0 316 899 A2** décrit également une machine agricole tout à fait similaire à celle décrite dans le document précédent EP 0 269 901 A1. Le timon de cette machine connue comprend en effet également un timon primaire destiné à être lié (ici directement) aux deux barres inférieures et à la barre supérieure du dispositif d'attelage à trois points d'un véhicule tracteur, ainsi qu'un timon secondaire lié au timon primaire au moyen d'une rotule et supportant entièrement un dispositif de transmission.

Les machines agricoles décrites dans ces deux documents ne comportent pas de dispositif de liaison et de transmission. On notera d'ailleurs que le dételage et l'attelage de ces machines agricoles connues est très délicat car il faut faire reposer l'avant du timon directement sur le sol au droit de la rotule liant le timon primaire au timon secondaire ou bien prévoir deux béquilles : l'une supportant le timon primaire et une autre supportant le timon secondaire.

Le document **EP 0 512 326 A1** décrit également une machine agricole comportant un corps muni d'organes de travail et un timon. Ce timon comprend tout d'abord un timon primaire destiné à être lié aux deux barres inférieures du dispositif d'attelage à trois points d'un véhicule tracteur. Le timon comprend ensuite un timon secondaire lié au corps et un dispositif de liaison et de transmission liant le timon primaire au timon secondaire et par l'intermédiaire duquel sont animés les organes de travail à partir de la prise de force du véhicule tracteur.

Le dispositif de liaison et de transmission comporte une partie primaire et une partie secondaire pouvant pivoter l'une par rapport à l'autre autour d'un axe vertical. La partie primaire comporte un carter contenant un arbre d'entrée et un couple de roues dentées coniques, tandis que la partie secondaire comporte un carter contenant un arbre de sortie et un couple de roues dentées coniques. Le mouvement de la prise de force du véhicule tracteur est ainsi transmis aux organes de travail via un arbre de transmission à cardans accouplant ladite prise de force à l'arbre d'entrée et un arbre de transmission accouplant l'arbre de sortie aux organes de travail.

Le timon secondaire est fixé à la partie secondaire, tandis que le timon primaire est lié à l'arrière du carter de la partie primaire au moyen d'une liaison du type pivot d'axe dirigé au moins sensiblement suivant la direction d'avance.

Il convient tout d'abord de faire observer que ce document est muet sur la configuration du guidage relatif entre la partie primaire et la partie secondaire, de même que sur la liaison entre le couple de roues dentées coniques contenu dans le carter de la partie primaire et celui contenu dans le carter de la partie secondaire.

Ensuite, dans ce dispositif de liaison et de transmission connu, le timon primaire est également lié au carter de la partie primaire de sorte que tout l'effort de traction exercé par le véhicule tracteur passe donc là-aussi par le carter de la partie primaire. De surcroît, la liaison du timon primaire à la partie primaire est aussi décalée par rapport à l'axe vertical du dispositif de liaison et de transmission.

Dans le document **EP 0 434 915 A2** qui constitue l'état de la technique le plus proche, est décrit un dispositif comportant un timon primaire et un dispositif de liaison et de transmission lequel est destiné à être lié à un outil à tracter et à animer. Il n'est certes pas précisé que la liaison entre le dispositif de liaison et de transmission et l'outil est faite au moyen d'un timon secondaire, mais cet agencement est parfaitement connu. Le timon primaire, quant à lui, est destiné à être lié aux deux barres inférieures du dispositif d'attelage d'un véhicule tracteur de sorte à pouvoir pivoter autour d'un premier axe matérialisé par les deux points de liaison auxdites barres inférieures.

Le dispositif de liaison et de transmission comporte une partie primaire et une partie secondaire pouvant pivoter l'une par rapport à l'autre autour d'un deuxième axe au moins sensiblement vertical. La partie primaire comporte un carrer contenant un arbre d'entrée et une roue dentée conique accouplés à une roue dentée conique et un arbre intermédiaire dont l'axe de rotation est confondu avec le deuxième axe. La partie secondaire destinée à être liée à l'outil à tracter et à animer, comporte un fût centré sur le deuxième axe et guidé en rotation dans un moyeu de la partie primaire. Ce guidage est fait au moyen de deux roulements coniques.

Le timon primaire est, du reste, lié sous le carter de la partie primaire au moyen d'une liaison du type pivot d'axe dirigé au moins sensiblement suivant la direction d'avance.

Il convient enfin encore de préciser que l'arbre d'entrée de la partie primaire est destiné à être accouplé à la prise de force du véhicule tracteur au moyen d'un arbre de transmission à cardans et que l'arbre de sortie de la partie secondaire est destiné à transmettre le mouvement aux organes de travail de l'outil à tracter et à animer à l'aide de moyens de transmission appropriés.

Dans ce dispositif de liaison et de transmission connu, le timon primaire est lié au carter de la partie primaire. Tout l'effort de traction exercé par le véhicule tracteur sur le timon primaire passe donc aussi par le carter de la partie primaire.

Le but de la présente invention est de remédier aux inconvénients de l'art antérieur et notamment celui connu par le document EP 0 434 915 A2.

A cet effet, la machine agricole de l'invention, qui comporte un corps muni d'organes de travail et un timon comprenant un timon primaire destiné à être lié aux deux barres inférieures du dispositif d'attelage d'un véhicule tracteur de sorte à pouvoir pivoter autour d'un premier axe matérialisé par les deux points de liaison auxdites barres inférieures, un timon secondaire lié au corps et un dispositif de liaison et de transmission liant le timon primaire au timon secondaire et par l'intermédiaire duquel sont animés les organes de travail à partir de la prise de force dudit véhicule tracteur, ledit dispositif de liaison et de transmission comportant une partie primaire et une partie secondaire pouvant pivoter l'une par rapport à l'autre autour d'un deuxième axe au moins sensiblement vertical, ladite partie primaire comportant un carter contenant un arbre d 'entrée et une roue dentée conique accouplés à une roue dentée conique et un arbre intermédiaire dont l'axe de rotation est confondu avec le deuxième axe, la partie secondaire liée au timon secondaire, comportant un fût centré sur le deuxième axe et guidé en rotation dans un moyeu de la partie primaire à laquelle est lié le timon primaire au moyen d'une première liaison d'axe dirigé au moins sensiblement suivant la direction d'avance, est caractérisée en ce que le timon primaire est lié directement au moyeu de la partie primaire d'une part à l'avant dudit moyeu à l'aide de la première liaison et, d'autre part, à l'arrière de celui-ci à l'aide d'un deuxième liaison d'axe confondu avec l'axe de la première liaison.

Grâce à cette caractéristique, le timon primaire conserve une grande mobilité autour du troisième axe dirigé au moins sensiblement suivant la direction d'avance, alors que la liaison entre ledit timon primaire et le dispositif de liaison et de transmission a été nettement améliorée du point de vue de la transmission des efforts. Le timon primaire est en effet articulé directement sur le moyeu de la partie primaire, qui est guidé en rotation sur le fût de la partie secondaire, elle-même liée au timon secondaire. Les efforts de traction exercés par le véhicule tracteur sur le timon primaire ne passent donc plus par le carter de la partie primaire. Du reste, le timon primaire est lié à l'avant et à l'arrière du moyeu de la partie primaire, ce qui est également bénéfique.

Selon une caractéristique supplémentaire de l'invention, il pourra être prévu que le troisième axe coupe le deuxième axe.

Selon une autre caractéristique supplémentaire de l'invention, il pourra être prévu qu'au moins la deuxième liaison soit une liaison du type pivot. Dans ce cas, l'effort de traction appliqué par le véhicule tracteur sur le timon primaire sera transmis au dispositif de liaison et de transmission par l'arrière.

Selon une autre caractéristique supplémentaire de l'invention, le moyeu pourra être guidé sur le fût au moyen de deux paliers distants l'un de l'autre. De préférence, ces paliers seront constitués de roulements. De préférence également, la première liaison et la deuxième liaison s'étendront, dans ce cas, au moins sensiblement à mi-distance entre ces deux paliers. Les efforts sur les paliers seront ainsi plus équilibrés.

Selon une autre caractéristique supplémentaire de l'invention, l'arbre intermédiaire pourra être guidé dans le fût au moyen de deux roulements.

Selon une autre caractéristique supplémentaire de l'invention, la première liaison et la deuxième liaison pourront comporter chacune un tourillon prévu sur le moyeu de la partie primaire du dispositif de liaison et de transmission et un fourreau prévu sur le timon primaire.

Lorsque la partie primaire comportera un carter et/ou un moyeu réalisé(s) par coulée, lesdits tourillons seront alors avantageusement directement obtenus par coulée.

Selon une autre caractéristique supplémentaire de l'invention, le timon primaire pourra comporter un cintre présentant deux branches et une partie médiane, ledit cintre étant articulé sur le moyeu de la partie primaire du dispositif de liaison et de transmission au niveau de ladite partie médiane, tandis que l'extrémité libre de chaque branche est destinée à être liée à la barre inférieure correspondante du dispositif d'attelage du véhicule tracteur.

Selon une autre caractéristique supplémentaire de l'invention, le timon primaire pourra comporter en sus une traverse liant les deux branches du cintre entre elles.

Dans ce cas, la traverse sera avantageusement liée au moyeu de la partie primaire du dispositif de liaison et de transmission au moyen de l'une desdites liaisons, le cintre étant alors lié au moyeu de ladite partie primaire au moyen de l 'autre desdites liaisons.

Dans ce cas également, la partie médiane du cintre pourra avantageusement s'étendre, compte tenu du sens d'avance, derrière le moyeu de la partie primaire du dispositif de liaison et de transmission et y être liée au moyen de la deuxième liaison, tandis que la traverse sera implantée devant le moyeu de ladite partie primaire et y sera liée au moyen de la première liaison. L'effort de traction exercé par le véhicule tracteur sur le timon primaire sera ainsi directement transmis par le cintre au dispositif de liaison et de transmission.

Selon une autre caractéristique supplémentaire de l'invention, la traverse pourra s'étendre dans un plan au moins sensiblement vertical et au moins sensiblement parallèle au premier axe.

Selon une autre caractéristique supplémentaire de l'invention, la traverse pourra être liée de manière démontable aux deux branches du cintre.

Dans ce cas, la liaison entre la traverse et le cintre comportera avantageusement des moyens de compensation des tolérances de fabrication.

Préférentiellement, ces moyens de compensation des tolérances de fabrication comporteront une douille élastique au niveau de la liaison de chaque extrémité de la traverse à la branche correspondante du cintre.

Par ailleurs, l'axe de chacune de ces douilles élastiques sera, de préférence, au moins sensiblement parallèle au troisième axe.

D'autres caractéristiques et avantages de l'invention ressortent de la description suivante d'un exemple non limitatif de réalisation de l'invention, description faite en référence au dessin annexé sur lequel :
- la figure 1 représente une machine agricole selon l'invention attelée à un véhicule tracteur ;
- la figure 2 représente une vue latérale de la partie frontale du timon de la machine agricole de la figure 1, la machine agricole étant toutefois dételée du véhicule tracteur ;
- la figure 3 représente une vue suivant la flèche III (figure 2) de la partie frontale du timon, machine agricole dételée du véhicule tracteur ;
- la figure 4 représente une vue, à échelle agrandie, de la liaison du timon primaire au dispositif de liaison et de transmission, laquelle liaison a été coupée suivant le plan IV (figure 3) ;
- la figure 5 représente une vue, à échelle agrandie, de la liaison de la traverse à l'une des branches du cintre, laquelle liaison a été coupée suivant le plan V (figure 3).

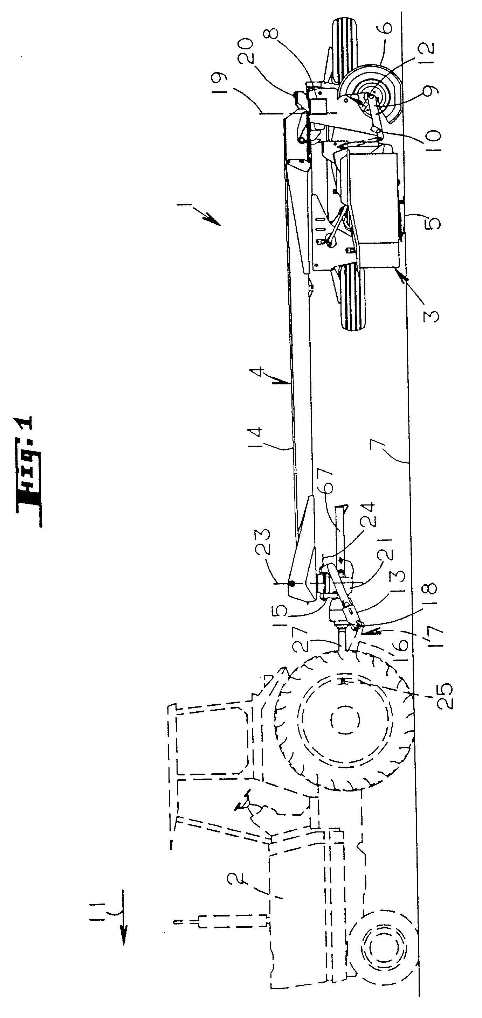

Sur la figure 1, on a représenté une machine agricole (1) attelée à un véhicule tracteur (2).

Cette machine agricole (1) comporte un corps (3) et un timon (4) lequel permet sa liaison audit véhicule tracteur (2).

Le corps (3) de cette machine agricole (1) est muni d'organes de travail (5) et de roues (6) par l'intermédiaire desquelles le corps (3) s'appuie sur le sol (7). Chaque roue (6) est liée au châssis (8) dudit corps (3) au moyen d'un bras de roue (9) correspondant, de sorte à pouvoir pivoter autour d'un axe (10) horizontal dirigé transversalement à la direction d'avance (11). Le pivotement du bras de roue (9) autour de l'axe (10) est réalisé au moyen d'un vérin hydraulique (12) correspondant.

Le timon (4) comprend un timon primaire (13), un timon secondaire (14) et un dispositif de liaison et de transmission (15).

Le timon primaire (13) est destiné à être lié aux deux barres inférieures (16) du dispositif d'attelage (17) du véhicule tracteur (2). Le timon primaire (13) peut ainsi pivoter autour d'un premier axe (18) matérialisé par les deux points de liaison auxdites barres inférieures (16). Ce premier axe de pivotement (18) s'étend, en position normale de déplacement, au moins sensiblement horizontalement et au moins sensiblement orthogonalement à la direction d'avance (11).

Le timon secondaire (14) est lié au corps (3) de sorte à pouvoir être pivoté autour d'un axe (19) dirigé vers le haut, de préférence sous l'action d'un vérin hydraulique (20). En position normale de déplacement, l'axe (19) est au moins sensiblement vertical. Le timon (4) peut ainsi occuper une position de transport et au moins une position de travail par rapport au corps (3).

Le dispositif de liaison et de transmission (15) comporte deux parties (21, 22) pouvant pivoter l'une par rapport à l'autre autour d'un deuxième axe (23) dirigé vers le haut (en position normale de déplacement, ce deuxième axe (23) s'étend au moins sensiblement verticalement). La partie secondaire (22) est fixée sur le timon secondaire (14). Le timon primaire (13), quant à lui, est articulé sur la partie primaire (21) de sorte à pouvoir pivoter autour d'un troisième axe (24) dirigé au moins sensiblement suivant la direction d'avance (11).

L'animation des organes de travail (5) est réalisée à partir de l'arbre (25) de prise de force du véhicule tracteur (2). Cet arbre (25) est accouplé à un arbre d'entrée (26) (dont l'axe de rotation est dirigé au moins sensiblement suivant la direction d'avance (11)) de la partie primaire (21) au moyen d'un arbre de transmission télescopique à joints universels (27). Le mouvement est transmis à l'intérieur du dispositif de liaison et de transmission (15) depuis l'arbre d'entrée (26) de la partie primaire (21) jusqu'à un arbre de sortie (28) de la partie secondaire (22) par un mécanisme connu de l'homme de l'art et qui sera succinctement décrit ultérieurement. L'arbre de sortie (28) est accouplé, au moyen d'un joint universel (29), à un arbre de transmission (30) logé à l'intérieur du timon secondaire (14). La poursuite de la transmission du mouvement ne sera pas décrite plus en détail car elle est connue de l'homme de l'art (confer à titre d'exemple non limitatif le document EP 0 429 382 A1 auquel on se reportera en cas de besoin).

Grâce à ce timon (4), la machine agricole (1) possède divers degrés de liberté par rapport au véhicule tracteur (2) :
- rotation autour du premier axe (18) pour que la machine agricole (1) puisse se déplacer par rapport au véhicule tracteur (2) dans un plan au moins sensiblement vertical ;
- rotation autour du deuxième axe (23) pour que la machine agricole (1) puisse se déplacer par rapport au véhicule tracteur (2) dans un plan au moins sensiblement horizontal (négociation de virages) ;
- rotation autour du troisième axe (24).

La première rotation et la troisième rotation permettent à la machine agricole (1) de s'adapter parfaitement au relief du sol (7) indépendamment du véhicule tracteur (2). On élimine ainsi tout risque de déformation du timon (4) et/ou de renversement du véhicule tracteur (2).

La deuxième rotation permet de négocier des virages de très grande amplitude sans risques pour l'arbre de transmission télescopique à joints universels (27).

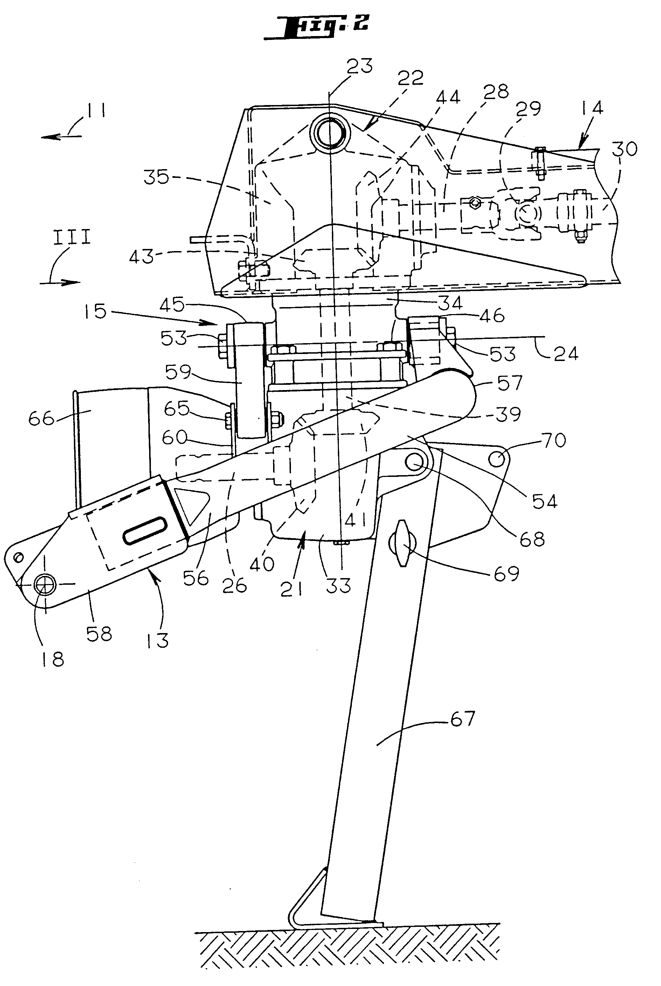

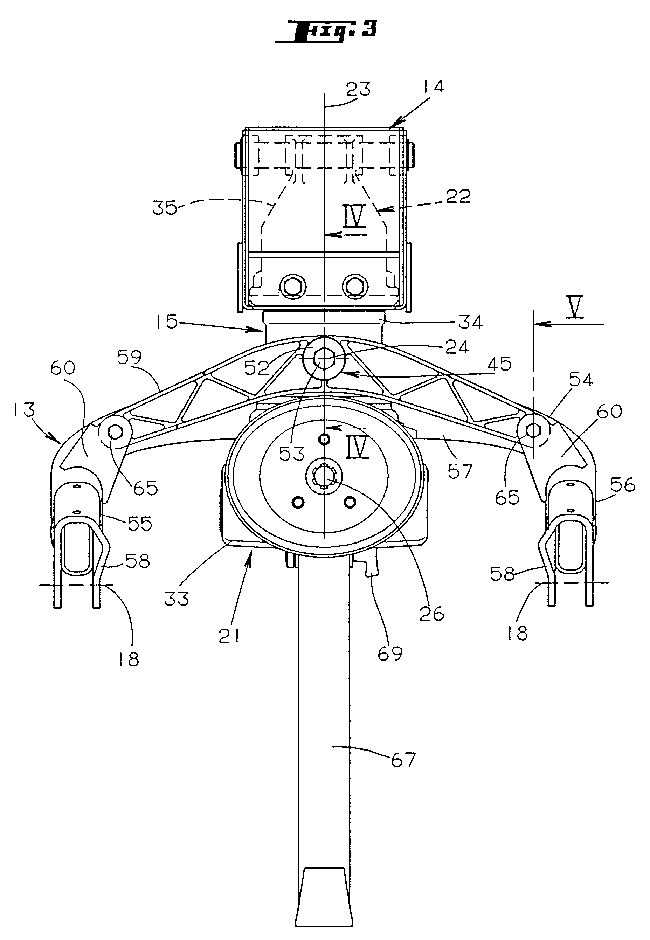

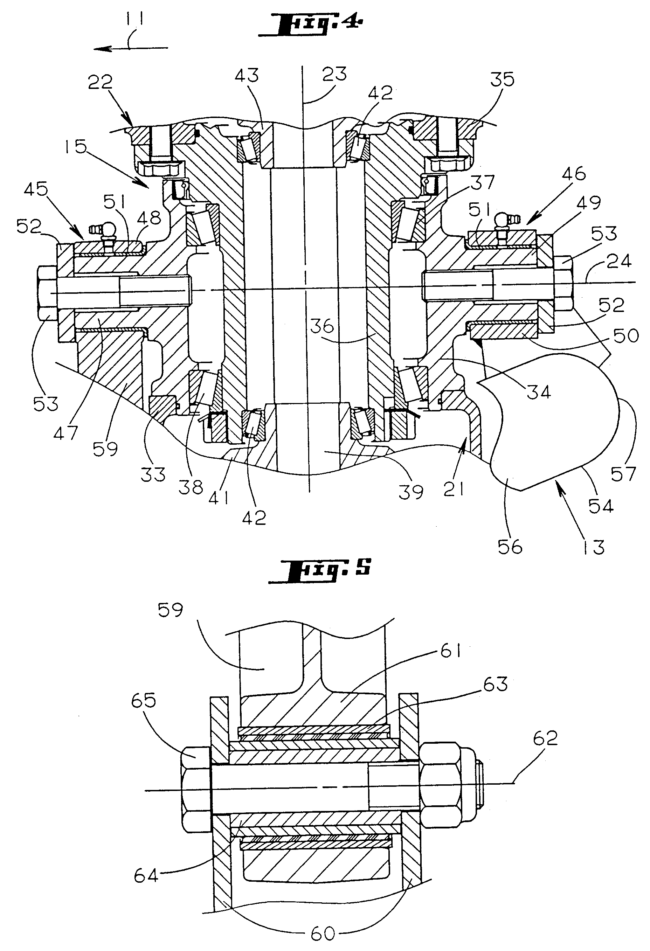

Le dispositif de liaison et de transmission (15) est représenté plus en détail sur les figures 2 à 5.

La partie primaire (21) comporte un carter (33) présentant un moyeu (34) dirigé vers la partie secondaire (22). Celle-ci comporte un carter (35) présentant un fût (36) dirigé vers la partie primaire (21). Le fût (36) est centré sur le deuxième axe (23) et s'étend à l'intérieur du moyeu (34) lequel y est guidé en rotation au moyen de deux roulements (37, 38) distants l'un de l'autre.

A l'intérieur du carter (33), l'arbre d'entrée (26) est accouplé à un arbre intermédiaire (39) au moyen d'un couple de roues dentées coniques (40, 41). Cet arbre intermédiaire (39) est guidé en rotation dans le fût (36) grâce à deux roulements (42) et son axe de rotation est confondu avec le deuxième axe (23). A l'intérieur du carter (35), l'arbre intermédiaire (39) est accouplé à l'arbre de sortie (28) au moyen d'un couple de roues dentées coniques (43, 44).

La partie secondaire (22), plus précisément le carter (35) de celle-ci, est liée au timon secondaire (14) d'une manière qui est parfaitement connue de l'homme de l'art et qui est clairement expliquée dans le document EP 0 196 263 A1 auquel on se reportera en cas de besoin. On comprendra toutefois que cette liaison pourrait être différente.

Le timon primaire (13), quant à lui, est, compte tenu du sens d'avance (11), lié à l'avant de la partie primaire (21) au moyen d'une première liaison (45), et, à l'arrière, au moyen d'une deuxième liaison (46). L'axe de la première liaison (45) et l'axe de la deuxième liaison (46) sont confondus et constituent le troisième axe (24). Sur les figures 2 à 4, il apparaît que ce troisième axe (24) coupe orthogonalement le deuxième axe (23). Il apparaît, du reste, sur la figure 4, que la première liaison (45) et la deuxième liaison (46) s'étendent au moins sensiblement à mi-distance entre les deux roulements (37, 38) guidant le moyeu (34) sur le fût (36).

La première liaison (45) comporte un tourillon (47) solidaire du moyeu (34) et un fourreau (48) solidaire du timon primaire (13). La deuxième liaison (46) comporte également un tourillon (49) solidaire du moyeu (34) et un fourreau (50) solidaire du timon primaire (13). Comme visible, le moyeu (34) est réalisé par coulée et les tourillons (47, 49) sont directement obtenus lors de ladite coulée. Chaque fourreau (48, 50) est monté sur le tourillon (47, 49) correspondant après interposition d'une bague (51). Une rondelle (52) maintenue par une vis (53) condamne toute translation du fourreau (48, 50) correspondant de sorte que la première liaison (45) et la deuxième liaison (46) sont des liaisons du type pivot. Toutefois, dans l'invention, seule l'une de ces liaisons (45, 46) pourra être du type pivot. Dans ce cas, ce sera préférentiellement la deuxième liaison (46) qui sera du type pivot.

Le timon primaire (13) comporte un cintre (54) ayant, en vue en plan, la forme d'un U, c'est-à-dire présentant deux branches (55, 56) et une partie médiane (57). A son extrémité libre, chaque branche (55, 56) est munie d'une chape d'attelage (58) destinée à être accouplée à la barre inférieure (16) correspondante du dispositif d'attelage (17) du véhicule tracteur (2). Il apparaît, du reste, que les deux branches (55, 56) sont sensiblement parallèles entre elles et s'étendent chacune au moins sensiblement dans un plan vertical parallèle à la direction d'avance (11). En vue de côté, on s'aperçoit que les deux branches (55, 56) sont en sus inclinées vers l'avant et le bas. La partie médiane (57), quant à elle, s'étend horizontalement et transversalement à la direction d'avance (11). Compte tenu du sens d'avance (11), elle s'étend de surcroît derrière la partie primaire (21) et supporte le fourreau (50) de la deuxième liaison (46).

Le timon primaire (13) comporte en sus une traverse (59) qui s'étend, compte tenu du sens d'avance (11), devant la partie primaire (21) et supporte le fourreau (48) de la première liaison (45). La traverse (59) s'étend également dans un plan au moins sensiblement vertical et au moins sensiblement parallèle au deuxième axe (18). De surcroît, elle lie les deux branches (55, 56) entre elles, lesquelles comportent chacune à cet effet une chape (60). La traverse (59), quant à elle, présente, à chacune de ses extrémités libres, un manchon (61) dont l'axe (62) est au moins sensiblement parallèle au troisième axe (24), lequel manchon (61) est destiné à s'étendre à l'intérieur de la chape (60) correspondante. A cet effet, la largeur dudit manchon (61) est quelque peu inférieure à la largeur intérieure de la chape (60). Une douille élastique (63) est introduite dans le manchon (61), tandis qu'à l'intérieur de ladite douille élastique (63) est montée une bague (64) dont la longueur est sensiblement égale à la largeur intérieure de la chape (60). Un boulon (65) est enfin introduit au travers de la chape (60) et de la bague (64). Les deux douilles élastiques (63) permettent de compenser les tolérances de fabrication.

Sur la figure 2, on voit enfin encore qu'un bol de protection (66) entoure l'arbre d'entrée (26) et qu'une béquille (67) montée sur le carter (33) de la partie primaire (21), supporte la partie frontale du timon (4) quand la machine agricole (1) est dételée du véhicule tracteur (2). Lorsque la machine agricole (1) est attelée au véhicule tracteur (2), la béquille (67) est maintenue en position relevée après pivotement autour de l'axe (68) et introduction de la broche (69) dans le trou (70).

Diverses modifications peuvent être apportées à l'exemple de réalisation qui vient d'être décrit sans qu'on sorte pour autant du cadre général de la présente invention tel que défini dans les revendications suivantes.

C'est ainsi que la première liaison (45) et la deuxième liaison (46) pourraient être implantées de telle sorte que le troisième axe (24) qu'elles définissent, ne coupe pas le deuxième axe (23), mais soit suffisamment décalé latéralement par rapport à celui-ci pour que les tourillons (47, 49) puissent tout simplement être remplacés par un axe unique commun aux deux liaisons (45, 46).

Ces tourillons (47, 49) sont directement coulés dans la masse du moyeu (34). Mais ils pourraient également être rapportés et fixés solidement sur ledit moyeu (34).

Les tourillons (47, 49) pourraient également être solidaires du timon primaire (13), tandis que les fourreaux (48, 50) seraient prévus sur le moyeu (34).

## Revendications

1. Machine agricole (1) comportant un corps (3) muni d'organes de travail (5) et un timon (4) comprenant un timon primaire (13) destiné à être lié aux deux barres inférieures (16) du dispositif d'attelage (17) d'un véhicule tracteur (2) de sorte à pouvoir pivoter autour d'un premier axe (18) matérialisé par les deux points de liaison auxdites barres inférieures (16), un timon secondaire (14) lié au corps (3) et un dispositif de liaison et de transmission (15) liant le timon primaire (13) au timon secondaire (14) et par l'intermédiaire duquel sont animés les organes de travail (5) à partir de la prise de force (25) dudit véhicule tracteur (2), ledit dispositif de liaison et de transmission (15) comportant une partie primaire (21) et une partie secondaire (22) pouvant pivoter l'une par rapport à l'autre autour d'un deuxième axe (23) au moins sensiblement vertical, ladite partie primaire (21) comportant un carter (33) contenant un arbre d'entrée (26) et une roue dentée conique (40) accouplés à une roue dentée conique (41) et un arbre intermédiaire (39) dont l'axe de rotation est confondu avec le deuxième axe (23), la partie secondaire (22) liée au timon secondaire (14), comportant un fût (36) centré sur le deuxième axe (23) et guidé en rotation dans un moyeu (34) de la partie primaire (21) à laquelle est lié le timon primaire (13) au moyen d'une première liaison (45) d'axe (24) dirigé au moins sensiblement suivant la direction d'avance (11), ***caractérisée en ce*** que le timon primaire (13) est lié directement au moyeu (34) de la partie primaire (21) d'une part à l'avant dudit moyeu (34) à l'aide de la première liaison (45) et, d'autre part, à l'arrière de celui-ci à l'aide d'une deuxième liaison (46) d'axe confondu avec l'axe (24) de la première liaison (45).

2. Machine agricole selon la revendication 1, ***caractérisée en ce*** que le troisième axe (24) coupe le deuxième axe (23).

3. Machine agricole selon la revendication 1 ou 2, ***caractérisée en ce*** qu'au moins la deuxième liaison (46) est une liaison du type pivot.

4. Machine agricole selon l'une quelconque des revendications 1 à 3, ***caractérisée en ce*** que le moyeu (34) est guidé sur le fût (36) au moyen de deux paliers (37, 38) distants l'un de l'autre.

5. Machine agricole selon la revendication 4, ***caractérisée en ce*** que les paliers (37, 38) sont constitués de roulements.

6. Machine agricole selon la revendication 4 ou 5, ***caractérisée en ce*** que la première liaison (45) et la deuxième liaison (46) s'étendent au moins sensiblement à mi-distance entre les deux paliers (37, 38).

7. Machine agricole selon l'une quelconque des revendications 1 à 6, ***caractérisée en ce*** que l'arbre intermédiaire (39) est guidé en rotation dans le fût (36) au moyen de deux roulements (42).

8. Machine agricole selon l'une quelconque des revendications 1 à 7, ***caractérisée en ce*** que la première liaison (45) et la deuxième liaison (46) comportent chacune un tourillon (47, 49) prévu sur le moyeu (34) de la partie primaire (21) et un fourreau (48, 50) prévu sur le timon primaire (13).

9. Machine agricole selon la revendication 8, ***caractérisée en ce*** que le moyeu (34) de la partie primaire (21) est réalisé par coulée et que les tourillons (47, 49) sont également obtenus par coulée.

10. Machine agricole selon l'une quelconque des revendications 1 à 9, ***caractérisée en ce que*** le timon primaire (13) comporte un cintre (54) présentant deux branches (55, 56) et une partie médiane (57), ledit cintre (54) étant articulé sur le moyeu (34) de la partie primaire (21) au niveau de ladite partie médiane (57), tandis que l'extrémité libre de chaque branche (55, 56) est destinée à être liée à la barre inférieure (16) correspondante du dispositif d'attelage (17) du véhicule tracteur (2).

11. Machine agricole selon la revendication 10, ***caractérisée en ce*** que le timon primaire (13) comporte en sus une traverse (59) liant les deux branches (55, 56) du cintre (54) entre elles.

12. Machine agricole selon la revendication 11, ***caractérisée en ce*** que la traverse (59) est liée au moyeu (34) de la partie primaire (21) au moyen de l'une desdites liaisons (45, 46), le cintre (54) étant alors lié au moyeu (34) de la partie primaire (21) au moyen de l'autre de ces liaisons (45, 46).

13. Machine agricole selon la revendication 11 ou 12, ***caractérisée en ce*** que la partie médiane (57) du cintre (54) s'étend, compte tenu du sens d'avance (11), derrière le moyeu (34) de la partie primaire (21) et y est liée au moyen de la deuxième liaison (46), tandis que la traverse (59) est implantée devant le moyeu (34) de ladite partie primaire (21) et y est liée au moyen de la première liaison (45).

14. Machine agricole selon l'une quelconque des revendications 11 à 13, ***caractérisée en ce*** que la traverse (59) s'étend dans un plan au moins sensiblement vertical et au moins sensiblement parallèle au premier axe (18).

15. Machine agricole selon l'une quelconque des revendications 11 à 14, ***caractérisée en ce*** que la traverse (59) est liée de manière démontable aux deux branches (55, 56) du cintre (54).

16. Machine agricole selon la revendication 15, ***caractérisée en ce*** que la liaison entre la traverse (59) et le cintre (54) comporte des moyens (63) de compensation des tolérances de fabrication.

17. Machine agricole selon la revendication 16, ***caractérisée en ce*** que les moyens (63) de compensation des tolérances de fabrication comportent une douille élastique (63) au niveau de la liaison de chaque extrémité de la traverse (59) à la branche (55, 56) correspondante du cintre (54).

18. Machine agricole selon la revendication 17, ***caractérisée en ce*** que l'axe (62) de chaque douille élastique (63) est au moins sensiblement parallèle au troisième axe (24).

19. Machine agricole selon l'une quelconque des revendications 1 à 18, ***caractérisée en ce*** que la partie secondaire (22) comporte un carter (35) contenant un arbre de sortie (28) et une roue dentée conique (44) accouplés à une roue dentée conique (43) et l'arbre intermédiaire (39).

## Claims

1. Agricultural machine (1) comprising a body (3) equipped with working members (5) and a drawbar (4) comprising a primary drawbar (13) intended to be connected to the two lower bars (16) of the hitching device (17) of a tractor vehicle (2) so as to be able to pivot about a first axis (18) embodied by the two points of connection to the said lower bars (16), a secondary drawbar (14) connected to the body (3) and a connecting and transmission device (15) connecting the primary drawbar (13) to the secondary drawbar (14) and by means of which the working members (5) are driven from the power take-off (25) of the said tractor vehicle (2), the said connecting and transmission device (15) comprising a primary part (21) and a secondary part (22) that can pivot one with respect to the other about a second at least approximately vertical axis (23), the said primary part (21) comprising a casing (33) containing an input shaft (26) and a bevel gear (40) which are coupled to a bevel gear (41) and an intermediate shaft (39) the axis of rotation of which coincides with the second axis (23), the secondary part (22) connected to the secondary drawbar (14) comprising a hollow shaft (36) centred on the second axis (23) and guided in rotation in a hub (34) of the primary part (21) to which the primary drawbar (13) is connected by means of a first connection (45) the axis (24) of which points at least approximately in the direction of travel (11), ***characterized in*** that the primary drawbar (13) is connected directly to the hub (34) of the primary part (21) on the one hand at the front of the said hub (34) by means of the first connection (45) and on the other hand at the back of the said hub by means of a second connection (46), the axis of which coincides with the axis (24) of the first connection (45).

2. Agricultural machine according to Claim 1, ***characterized in*** that the third axis (24) intersects with the second axis (23).

3. Agricultural machine according to Claim 1 or 2, ***characterized in*** that at least the second connection (46) is a connection of the pivot type.

4. Agricultural machine according to any one of Claims 1 to 3, ***characterized in*** that the hub (34) is guided on the hollow shalt (36) by means of two bearings (37, 38) which are distant from each other.

5. Agricultural machine according to Claim 4, ***characterized in*** that the bearings (37, 38) consist of rolling bearings.

6. Agricultural machine according to Claim 4 or 5, ***characterized in*** that the first connection (45) and the second connection (46) extend at least approximately midway between the two bearings (37, 38).

7. Agricultural machine according to any one of Claims 1 to 6, ***characterized in*** that the intermediate shaft (39) is guided in rotation in the hollow shaft (36) by means of two rolling bearings (42).

8. Agricultural machine according to any one of Claims 1 to 7, ***characterized in*** that the first connection (45) and the second connection (46) each comprise a journal (47, 49) provided on the hub (34) of the primary part (21) and a sleeve (48, 50) provided on the primary drawbar (13).

9. Agricultural machine according to Claim 8, ***characterized in*** that the hub (34) of the primary part (21) is produced by casting and that the journals (47, 49) are also obtained by casting.

10. Agricultural machine according to any one of Claims 1 to 9, ***characterized in*** that the primary drawbar (13) comprises a curved member (54) with two branches (55, 56) and a middle part (57), the said curved member (54) being articulated to the hub (34) of the primary part (21) at the said middle part (57), while the free end of each branch (55, 56) is intended to be connected to the corresponding lower bar (16) of the hitching device (17) of the tractor vehicle (2).

11. Agricultural machine according to Claim 10, ***characterized in*** that the primary drawbar (13) additionally comprises a crossmember (59) connecting the two branches (55, 56) of the curved member (54) together.

12. Agricultural machine according to Claim 11, ***characterized in*** that the crossmember (59) is connected to the hub (34) of the primary part (21) by means of one of the said connections (45, 46), the curved member (54) then being connected to the hub (34) of the primary part (21) by means of the other of these connections (45, 46).

13. Agricultural machine according to Claim 11 or 12, ***characterized in*** that the middle part (57) of the curved member (54) extends, bearing in mind the direction of travel (11), behind the hub (34) of the primary part (21) and is connected thereto by means of the second connection (46), whereas the crossmember (59) is fitted in front of the hub (34) of the said primary part (21) and is connected thereto by means of the first connection (45).

14. Agricultural machine according to any one of Claims 11 to 13, ***characterized in*** that the crossmember (59) extends in a plane which is at least approximately vertical and at least approximately parallel to the first axis (18).

15. Agricultural machine according to any one of Claims 11 to 14, ***characterized in*** that the crossmember (59) is connected removably to the two branches (55, 56) of the curved member (54).

16. Agricultural machine according to Claim 15, ***characterized in*** that the connection between the crossmember (59) and the curved member (54) comprises means (63) for compensating for the manufacturing tolerances.

17. Agricultural machine according to Claim 16, ***characterized in*** that the means (63) for compensating for the manufacturing tolerances comprise an elastic bushing (63) at the connection between each end of the crossmember (59) and the corresponding branch (55, 56) of the curved member (54).

18. Agricultural machine according to Claim 17, ***characterized in*** that the axis (62) of each elastic bushing (63) is at least approximately parallel to the third axis (24).

19. Agricultural machine according to any one of Claims 1 to 18, ***characterized in*** that the secondary part (22) comprises a casing (35) containing an output shalt (28) and a bevel gear (44) which are coupled to a bevel gear (43) and the intermediate shaft (39).

## Patentansprüche

1. Landwirtschaftliche Maschine (1) mit einem Körper (3), der mit Arbeitselementen (5) versehen ist, und einer Deichsel (4), die eine Primärdeichsel (13) zur derartigen Verbindung mit den beiden unteren Stangen (16) der Kupplungsvorrichtung (17) einer Zugmaschine (2), daß sie um eine durch die beiden Verbindungspunkte mit den unteren Stangen (16) gebildete erste Achse (18) schwenken kann, eine Sekundärdeichsel (14), die mit dem Körper (3) verbunden ist, und eine Verbindungs- und Übertragungsvorrichtung (15), die die Primärdeichsel (13) mit der Sekundärdeichsel (14) verbindet und mittels derer die Arbeitselemente (5) von der Zapfwelle (25) der Zugmaschine (2) aus in Bewegung gesetzt werden, umfaßt wobei die Verbindungs- und Übertragungsvorrichtung (15) einen Primärteil (21) und einen Sekundärteil (22) aufweist, die bezüglich einander um eine zumindest im wesentlichen vertikale zweite Achse (23) schwenken können, wobei der Primärteil (21) einen Getriebekasten (33) mit einer Eingangswelle (26) und einem Kegelrad (40), die mit einem Kegelrad (41) und einer Zwischenwelle (39) gekoppelt sind, deren Drehachse mit der zweiten Achse (23) zusammenfällt, aufweist und wobei der mit der Sekundärdeichsel (14) verbundene Sekundärteil (22) einen Hohlkörper (36) aufweist, der auf der zweiten Achse (23) zentriert ist und in einer Nabe (34) des Primärteils (21) drehbar geführt wird, mit dem die Primärdeichsel (13) mittels einer ersten Verbindung (45), die eine zumindest im wesentlichen in Fahrtrichtung (11) ausgerichtete Achse (24) aufweist, verbunden ist, ***dadurch gekennzeichnet,*** daß die Primärdeichsel (13) direkt mit der Nabe (34) des Primärteils (21) verbunden ist, einerseits mit Hilfe der ersten Verbindung (45) mit dem vorderen Teil der Nabe (34) und andererseits mit Hilfe einer zweiten Verbindung (46), die eine mit der Achse (24) der ersten Verbindung (45) zusammenfallende Achse aufweist, mit dem hinteren Teil der Nabe (34).

2. Landwirtschaftliche Maschine nach Anspruch 1, ***dadurch gekennzeichnet,*** daß die dritte Achse (24) die zweite Achse (23) schneidet.

3. Landwirtschaftliche Maschine nach Anspruch 1 oder 2, ***dadurch gekennzeichnet,*** daß es sich zumindest bei der zweiten Verbindung (46) um eine Zapfenverbindung handelt.

4. Landwirtschaftliche Maschine nach irgend einem der Ansprüche 1 bis 3, ***dadurch gekennzeichnet,*** daß die Nabe (34) mittels zweier voneinander beabstandeter Lager (37, 38) an dem Hohlkörper (36) geführt wird.

5. Landwirtschaftliche Maschine nach Anspruch 4, ***dadurch gekennzeichnet,*** daß die Lager (37, 38) aus Wälzlagern gebildet sind.

6. Landwirtschaftliche Maschine nach Anspruch 4 oder 5, ***dadurch gekennzeichnet,*** daß sich die erste Verbindung (45) und die zweite Verbindung (46) zumindest im wesentlichen auf halbe Entfernung zwischen den beiden Lagern (37, 38) erstrecken.

7. Landwirtschaftliche Maschine nach irgend einem der Ansprüche 1 bis 6, ***dadurch gekennzeichnet,*** daß die Zwischenwelle (39) mittels der beiden Wälzlager (42) in dem Hohlkörper (36) drehbar geführt wird.

8. Landwirtschaftliche Maschine nach irgend einem der Ansprüche 1 bis 7, ***dadurch gekennzeichnet,*** daß die erste Verbindung (45) und die zweite Verbindung (46) jeweils einen an der Nabe (34) des Primärteils (21) vorgesehenen Zapfen (47, 49) und eine an der Primärdeichsel (13) vorgesehene Buchse (48, 50) aufweisen.

9. Landwirtschaftliche Maschine nach Anspruch 8, ***dadurch gekennzeichnet**,* daß die Nabe (34) des Primärteils (21) durch Gießen hergestellt wird und daß die Zapfen (47, 49) ebenfalls durch Gießen erhalten werden.

10. Landwirtschaftliche Maschine nach irgend einem der Ansprüche 1 bis 9, ***dadurch gekennzeichnet,*** daß die Primärdeichsel (13) einen zwei Schenkel (55, 56) und einen mittleren Teil (57) aufweisenden Bogen (54) umfaßt, wobei der Bogen (54) in Höhe des mittleren Teils (57) an der Nabe (34) des Primärteils (21) angelenkt ist, während das freie Ende jedes Schenkels (55, 56) mit der dazugehörigen unteren Stange (16) der Kupplungsvorrichtung (17) der Zugmaschine (2) verbunden werden soll.

11. Landwirtschaftliche Maschine nach Anspruch 10, ***dadurch gekennzeichnet,*** daß die Primärdeichsel (13) des weiteren einen Querträger (59) aufweist, der die beiden Schenkel (55, 56) des Bogens (54) miteinander verbindet.

12. Landwirtschaftliche Maschine nach Anspruch 11, ***dadurch gekennzeichnet,*** daß der Querträger (59) mittels einer der Verbindungen (45, 46) mit der Nabe (34) des Primärteils (21) verbunden ist, wobei der Bogen (54) dann mittels der anderen dieser Verbindungen (45, 46) mit der Nabe (34) des Primärteils (21) verbunden ist.

13. Landwirtschaftliche Maschine nach Anspruch 11 oder 12, ***dadurch gekennzeichnet,*** daß sich der mittlere Teil (57) des Bogens (54) hinsichtlich der Fahrtrichtung (11) hinter der Nabe (34) des Primärteils (21) erstreckt und mittels der zweiten Verbindung (46) mit ihr verbunden ist, während der Querträger (59) vor der Nabe (34) des Primärteils (21) angeordnet und mittels der ersten Verbindung (45) mit ihr verbunden ist.

14. Landwirtschaftliche Maschine nach irgend einem der Ansprüche 11 bis 13, ***dadurch gekennzeichnet**,* daß sich der Querträger (59) in einer zumindest im wesentlichen vertikalen und zumindest im wesentlichen zur ersten Achse (18) parallelen Ebene erstreckt.

15. Landwirtschaftliche Maschine nach irgend einem der Ansprüche 11 bis 14, ***dadurch gekennzeichnet,*** daß der Querträger (59) abnehmbar mit den beiden Schenkeln (55, 56) des Bogens (54) verbunden ist.

16. Landwirtschaftliche Maschine nach Anspruch 15, ***dadurch gekennzeichnet,*** daß die Verbindung zwischen dem Querträger (59) und dem Bogen (54) Mittel (63) zum Ausgleich von Fertigungstoleranzen aufweist.

17. Landwirtschaftliche Maschine nach Anspruch 16, ***dadurch gekennzeichnet,*** daß die Mittel (63) zum Ausgleich von Fertiguugstoleranzen in Höhe der Verbindung jedes Endes des Querträgers (59) mit dem dazugehörigen Schenkel (55, 56) des Bogens (54) eine elastische Hülse (63) umfassen.

18. Landwirtschaftliche Maschine nach Anspruch 17, ***dadurch gekennzeichnet,*** daß die Achse (62) jeder elastischen Hülse (63) zumindest im wesentlichen parallel zur dritten Achse (24) ist.

19. Landwirtschaftliche Maschine nach irgend einem der Ansprüche 1 bis 18, ***dadurch gekennzeichnet,*** daß der Sekundärteil (22) einen Getriebekasten (35) aufweist, der eine Ausgangswelle (28) und ein Kegelrad (44), die mit einem Kegelrad (43) und der Zwischenwelle (39) gekoppelt sind, enthält.
